# EUROPEAN PATENT APPLICATION

(11) **EP 3 159 454 A1**
(43) Date of publication of application: **26.04.2017**
(21) Application number: 16179230.4
(22) Date of filing: 13.07.2016
(51) Int. Cl.: E02F 9/16, A47C 1/03, A47C 7/54, B60N 2/46, B66C 13/54, E02F 9/00

(54) **ARM REST FOR CABIN SEAT FOR EXCAVATOR**

(30) Priority: 23.10.2015 KR 20150006898 U
(71) Applicant: Um, Kihyun, Pyeongtaek-si 17815 (KR); Jeong, Junmi, Pyeongtaek-si 17815 (KR)
(72) Inventor: UM, Kihyun, Pyeongtaek-si 17815 (KR)
(74) Representative: Zardi, Marco

(57) **Abstract**

The invention relates to a cabin seat arm rest for an excavator, wherein the arm rest comprises: an arm rest body (A) operatively coupled to a cabin seat (2); and a support panel (B) disposed on the arm rest body (A) and configured to slide thereon in a front or rear or left or right direction, wherein the support panel (B) includes: a lower panel (20) slidably in a front-rear direction coupled to the arm rest body (A) and having a hinge shaft (21) formed at a rear end thereof; and an upper panel (30) disposed on the lower panel (20) and having a rear end horizontally pivotally coupled to the hinge shaft (21), wherein the cabin seat arm rest is characterized in that a first elastic member (12) is disposed between the arm rest body (A) and lower panel (20) to allow the lower panel (20) to move in a restorable manner in the front or rear direction, and in that a second elastic member (25) having two ends fixed to the lower panel (20) and upper panel (30) respectively is disposed around the hinge shaft (21) to allow the upper panel (30) to horizontally pivot in a restorable manner.

## Description

### FIELD OF THE INVENTION

The present invention relates to an arm rest for a cabin seat for an excavator.

### BACKGROUND OF THE INVENTION

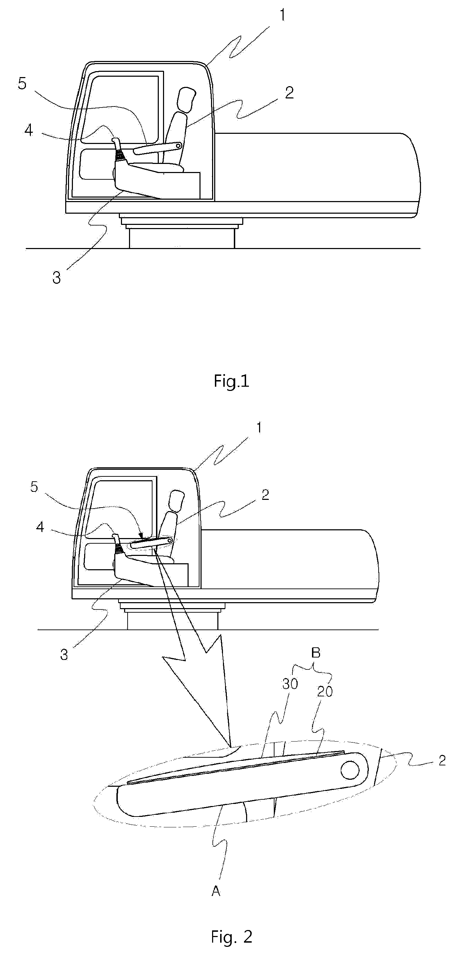

Conventionally, as shown in FIG. 1, an excavator cabin 1 contains therein a cabin seat 2, and both control boxes 3 at both sides of the cabin seat 2 respectively which have both control levers 4 respectively.

In operations, each control lever 4 may be moved in front and rear directions and right and left directions to input a control command to each control box 3.

During operations, a driver may rest his arm on each arm rest 5 at each side of the cabin seat 2 to allow the operator to control the control lever 4 while he rests his arm on each arm rest 5. In this connection, the conventional excavator cabin configuration having the arm rest is disclosed, for example, Korean Patent No. 10-0665109.

While the control lever 4 is moved in the front and rear directions and right and left directions, the arm rest 5 may not be moved in the front and rear directions and right and left directions correspondingly. Thus, this may lead to limited movement freedom of the arm of the driver resting on the arm rest and further a damage of the skin of the arm due to a forcible friction between the arm and the rest during the operations of the control lever 4 for a long time.

### BRIEF SUMMARY OF THE INVENTION

Thus, the present applicants have developed an arm rest for a cabin seat for an excavator configured to provide great movement freedom of the arm of the driver resting on the arm rest and, further, to prevent a damage of the skin of the arm, which is otherwise due to a forcible friction between the arm and the rest during the operations of the control lever for a long time.

In one aspect, there is provided a cabin seat arm rest for an excavator, wherein the arm rest comprises: an arm rest body operatively coupled to a cabin seat; and
a support panel disposed on the arm rest body and configured to slide thereon in a front or rear or left or right direction,
wherein the support panel includes:
a lower panel slidably in a front-rear direction coupled to the arm rest body and having a hinge shaft formed at a rear end thereof; and
an upper panel disposed on the lower panel and having a rear end horizontally pivotally coupled to the hinge shaft,
wherein the cabin seat arm rest is characterized in that a first elastic member is disposed between the arm rest body and lower panel to allow the lower panel to move in a restorable manner in the front or rear direction, and
in that a second elastic member having two ends fixed to the lower panel and upper panel respectively is disposed around the hinge shaft to allow the upper panel to horizontally pivot in a restorable manner.

In one embodiment, the arm rest body has a lower guide rail extending in the front-rear direction thereon, and an upper guide rail is disposed on a top of the lower panel.

In one embodiment, the first elastic member is embodied as a compression coil spring, and the second elastic member is embodied as a torsion spring.

In one embodiment, the upper panel has an inner space defined therein, and vent holes formed in a top portion of the upper panel to air-communicate with the inner space, wherein an air supply unit is air-coupled to the inner space to supply the air into the inner space.

In operations of the cabin seat arm rest for an excavator, while the driver rests his arm on the support panel, that is, the upper panel, the control lever is moved by the driver in the front and rear directions and right and left directions via the movement of his arm, and, at the same time, in a corresponding manner to the movement of his arm, the support panel may move in the front and rear directions along the lower guide rail 11 and/or the upper panel may pivot around the hinge shaft in the right and left directions.

This may provide great movement freedom of the arm of the driver resting on the arm rest and, further, prevent a damage of the skin of the arm, which is otherwise due to a forcible friction between the arm and the rest during the operations of the control lever for a long time.

### BRIEF DESCRPTION OF THE DRAWINGS

Additional advantages can be derived from the subsequent drawing description. The drawing figures illustrate embodiments of the invention. The drawing figures, the description and the claims include numerous features in combination. A person skilled in the art will view the features also individually and will combine them into useful additional combinations.
FIG. 1 shows a high-level side view of a typical excavator cabin.
FIG. 2 shows a high-level side view of an excavator cabin having an arm rest in accordance with the present invention.
FIG. 3 shows a detailed side view of a cabin seat arm rest for an excavator in accordance with one embodiment of the present invention.
FIG. 4 shows an exploded side view of a cabin seat arm rest for an excavator in accordance with one embodiment of the present invention.
FIG. 5 shows a top view of a lower panel of a cabin seat arm rest for an excavator in accordance with one embodiment of the present invention.
FIG. 6 shows a top view of an upper panel of a cabin seat arm rest for an excavator in accordance with one embodiment of the present invention.
FIG. 7 and FIG. 8 show translation and rotation movements of a cabin seat arm rest for an excavator in accordance with one embodiment of the present invention respectively.
FIG. 9 shows a top view of a cabin seat arm rest for an excavator in accordance with one variant of the present invention.
FIG. 10 shows an exploded side view of a cabin seat arm rest for an excavator in accordance with another embodiment of the present invention.

### DETAILED DESCRIPTIONS

Examples of various embodiments are illustrated in the accompanying drawings and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

Example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, s, operations, elements, and/or components, but do not preclude the presence or addition of one or more other features, integers, s, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

Spatially relative terms, such as "beneath," "below," "lower," "under," "above," "upper," and the like, may be used herein for ease of explanation to describe one element or feature's relationship to another element s or feature s as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented for example, rotated 90 degrees or at other orientations, and the spatially relative descriptors used herein should be interpreted accordingly.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the following description, numerous specific details are set forth in order to provide a thorough understanding of the present disclosure. The present disclosure may be practiced without some or all of these specific details. In other instances, well-known process structures and/or processes have not been described in detail in order not to unnecessarily obscure the present disclosure.

Hereinafter, embodiments of the present disclosure will be described in details with reference to attached drawings.

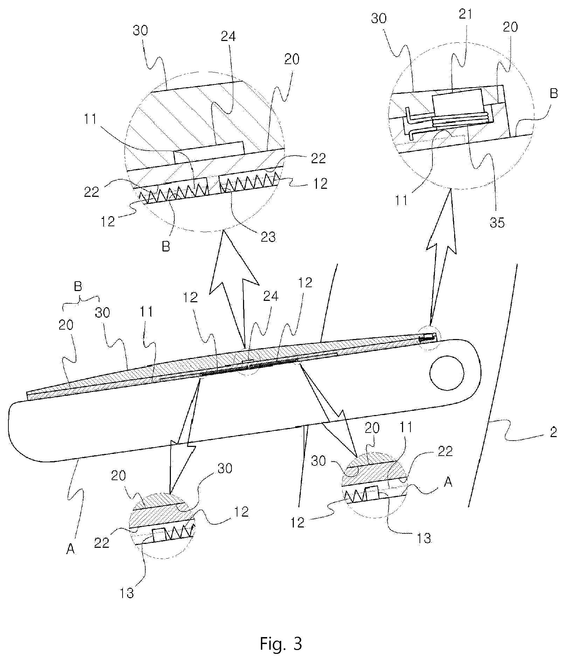

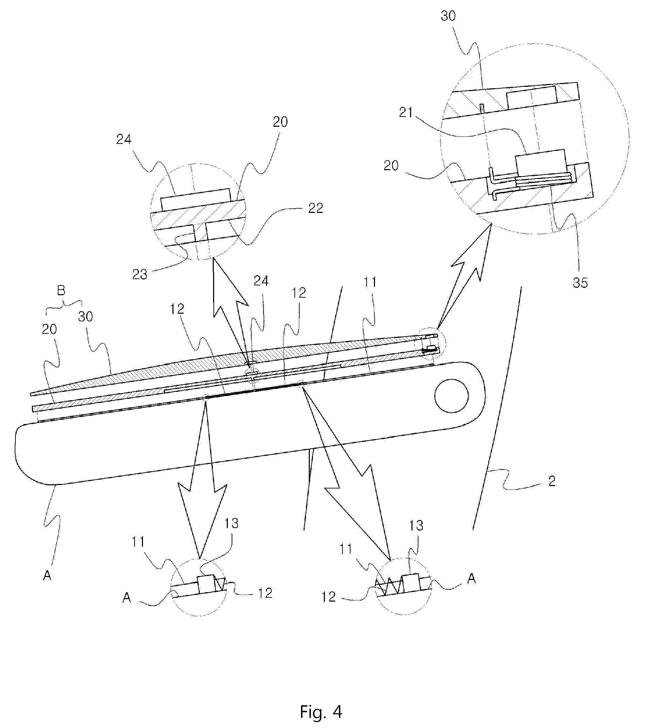

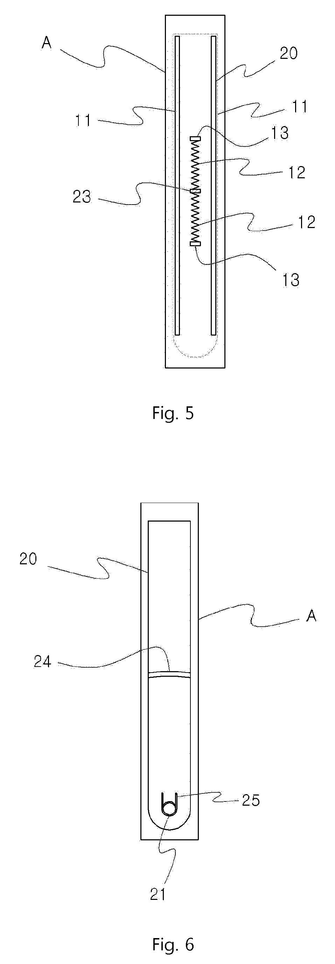

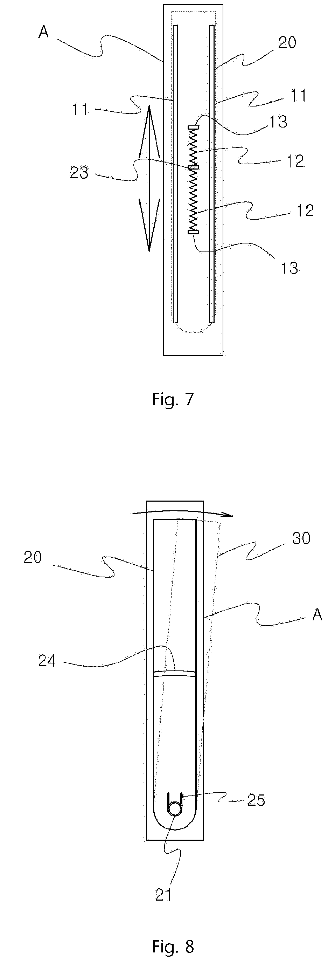

FIG. 2 shows a high-level side view of an excavator cabin having an arm rest in accordance with the present invention. FIG. 3 shows a detailed side view of a cabin seat arm rest for an excavator in accordance with one embodiment of the present invention. FIG. 4 shows an exploded side view of a cabin seat arm rest for an excavator in accordance with one embodiment of the present invention. FIG. 5 shows a top view of a lower panel of a cabin seat arm rest for an excavator in accordance with one embodiment of the present invention. FIG. 6 shows a top view of an upper panel of a cabin seat arm rest for an excavator in accordance with one embodiment of the present invention. FIG. 7 and FIG. 8 show translation and rotation movements of a cabin seat arm rest for an excavator in accordance with one embodiment of the present invention respectively.

Referring to FIG. 2 to FIG. 8, the arm rest may include an arm rest body A operatively coupled to the cabin seat 2, and a support panel B disposed on the arm rest body A and configured to slide thereon in the front and rear directions. The driver may rest his arm on the support panel B.

To be specific, the support panel B may include a lower panel 20 front and rear directions-slidably coupled to the arm rest body A and having a hinge shaft 21 formed at a rear end thereof, and an upper panel 30 disposed on the lower panel 20 and having a rear end horizontally pivotally coupled to the hinge shaft 21.

The arm rest body A may have a lower guide rail 11 extending in the front and rear directions thereon. Thus, the lower panel 20 may slide along and on the lower guide rail 11 in the front and rear directions.

Between the arm rest body A and lower panel 20, a first elastic member 12 may be disposed to allow the lower panel 20 to move in a restorable manner in the front and rear directions.

For this, on the arm rest body A, two lower protrusions 13 may be formed in a spaced manner from each other in the front and rear directions. In a bottom of the lower panel 20, a recess 22 may be formed to extend in the front and rear directions with a length larger than a front-rear direction length between the lower protrusions 13. An upper protrusion 23 may protrude downwardly from the lower panel 20 at a length central position of the recess 22 to divide the recess into first and second recesses.

The first elastic member 12 may be embodied as a combination of two compression coil springs extending in the front and rear directions. The two compression coil springs may be disposed in the first and second recesses respectively between the two lower protrusions 13 and upper protrusion 23 respectively. Thus, the lower panel 20 may move in a restorable manner in the front and rear directions.

Further, on a top of the lower panel 20, an upper guide rail 24 may be disposed to support the upper panel 30 thereon.

As shown in FIG. 6 and FIG. 8, the upper guide rail 24 may extend in an arc shape extending around the hinge shaft 21, to guide the right and left directional pivotal movement of the upper panel 30 around the hinge shaft 21.

Around the hinge shaft 21, a second elastic member 25 having two ends coupled to the lower panel 20 and upper panel 30 respectively may be disposed to allow the upper panel 30 to horizontally pivot in a restorable manner.

For this, the second elastic member 25 may be embodied as a torsion spring. For example, the torsion spring may have a coiled wire having two ends coupled to the lower panel 20 and upper panel 30 respectively.

In operations of the cabin seat arm rest for an excavator, while the driver rests his arm on the support panel B, that is, the upper panel 30, the control lever 4 is moved by the driver in the front and rear directions and right and left directions via the movement of his arm, and, at the same time, in a corresponding manner to the movement of his arm, the support panel B may move in the front and rear directions along the lower guide rail 11 and/or the upper panel 30 may pivot around the hinge shaft 21 in the right and left directions.

This may provide great movement freedom of the arm of the driver resting on the arm rest and, further, prevent a damage of the skin of the arm, which is otherwise due to a forcible friction between the arm and the rest during the operations of the control lever for a long time.

Further, the first elastic member 12 is disposed between the arm rest body A and lower panel 20 to allow the lower panel 20 to move in a restorable manner in the front and rear directions. Further, around the hinge shaft 21, the second elastic member 25 fixed to the lower panel 20 and upper panel 30 at two ends thereof to allow the upper panel 30 to pivot in a restorable manner. Thus, due to the first elastic member 12, in a state of lack of the arm force of the driver, the lower panel 20 may return to its original position in the front-rear direction. Due to the second elastic member 25, in a state of lack of the arm force of the driver, the upper panel 30 may return to its original position in the left-right direction.

Otherwise, without the first and/or second elastic members 12,25, the lower panel 20 may be position-offset from its original position in the front-rear direction or the upper panel 30 may be position-offset from its original position in the left-right direction when the arm force disappears. Such position-offsets of the lower panel 20 and the upper panel 30 may cause a subsequent manipulation of the control lever by the driver to be difficult.

However, in the invention, due to the first elastic member 12, in a state of lack of the arm force of the driver, the lower panel 20 may return to its original position in the front-rear direction. Due to the second elastic member 25, in a state of lack of the arm force of the driver, the upper panel 30 may return to its original position in the left-right direction. This original position may refer to a symmetrical positioning of the lower panel 20 and upper panel 30. Thus, the subsequent manipulation of the control lever by the driver may be easily effected.

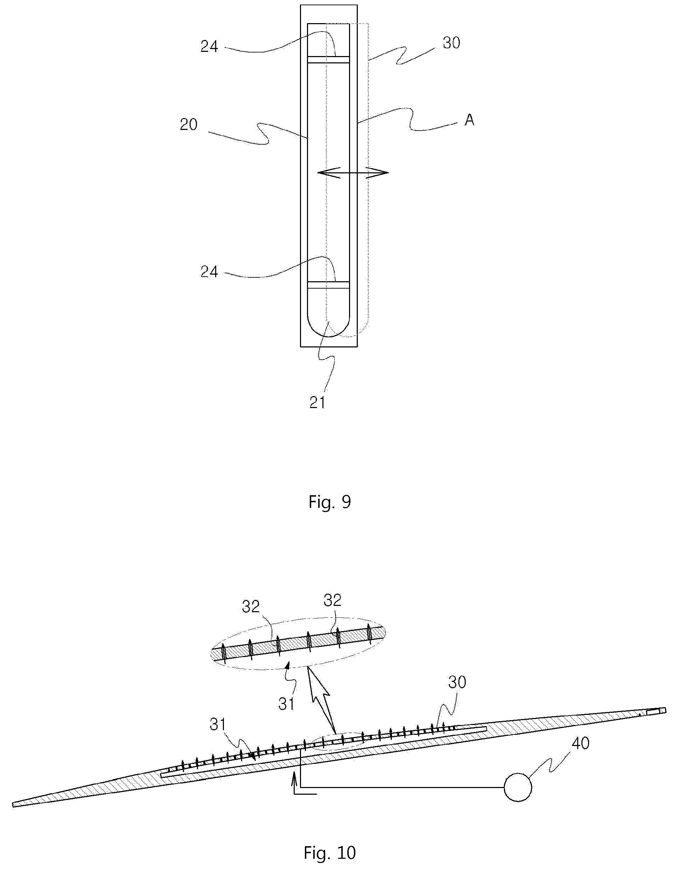

FIG. 9 shows a top view of a cabin seat arm rest for an excavator in accordance with one variant of the present invention. As shown in FIG. 8, the left-right directional movement of the upper panel 30 is pivotal. Thus, the upper guide rail 24 is formed in the arc shape. The invention is not limited thereto. As shown in FIG. 9, the left-right directional movement of the upper panel 30 may be translational. Thus, the upper guide rail 24 is formed in a liner shape.

FIG. 10 shows an exploded side view of a cabin seat arm rest for an excavator in accordance with another embodiment of the present invention. In this embodiment, the upper panel 30 may have an inner space 31 defined therein and vent holes 32 may be formed in a top portion of the upper panel 30 to communicate with the inner space 31. An air supply unit 40 may be air-coupled to the inner space 31 to supply the air into the inner space 31. The air supply unit 40 may be embodied as an air compressor provided for the excavator.

In operations, the air supply unit 40 may supply the air into the inner space 31, and, in turn, the air may be fed from the space through the vent holes 32 to the arm of the user rested on the upper panel 30. Thus, the arm of the driver may be free of a sweat rapidly to prevent the arm from slipping on the arm rest.

The above description is not to be taken in a limiting sense, but is made merely for the purpose of describing the general principles of exemplary embodiments, and many additional embodiments of this disclosure are possible. It is understood that no limitation of the scope of the disclosure is thereby intended. The scope of the disclosure should be determined with reference to the Claims. Reference throughout this specification to "one embodiment," "an embodiment," or similar language means that a particular feature, structure, or characteristic that is described in connection with the embodiment is included in at least one embodiment of the present disclosure. Thus, appearances of the phrases "in one embodiment," "in an embodiment," and similar language throughout this specification may, but do not necessarily, all refer to the same embodiment.

## Claims

1. A cabin seat arm rest for an excavator,
wherein the arm rest comprises:
an arm rest body (A) operatively coupled to a cabin seat (2); and
a support panel (B) disposed on the arm rest body (A) and configured to slide thereon in a front or rear or left or right direction,
wherein the support panel (B) includes:
a lower panel (20) slidably in a front-rear direction coupled to the arm rest body (A) and having a hinge shaft (21) formed at a rear end thereof; and
an upper panel (30) disposed on the lower panel (20) and having a rear end horizontally pivotally coupled to the hinge shaft (21),
wherein the cabin seat arm rest is **characterized in that** a first elastic member (12) is disposed between the arm rest body (A) and lower panel (20) to allow the lower panel (20) to move in a restorable manner in the front or rear direction, and
**in that** a second elastic member (25) having two ends fixed to the lower panel (20) and upper panel (30) respectively is disposed around the hinge shaft (21) to allow the upper panel (30) to horizontally pivot in a restorable manner.

2. The cabin seat arm rest of claim 1, wherein the arm rest body (A) has a lower guide rail (11) extending in the front-rear direction thereon, and an upper guide rail (24) is disposed on a top of the lower panel (20).

3. The cabin seat arm rest of claim 1, wherein the first elastic member (12) is embodied as a compression coil spring, and the second elastic member (25) is embodied as a torsion spring.

4. The cabin seat arm rest of claim 1, wherein the upper panel (30) has an inner space (31) defined therein, and vent holes (32) formed in a top portion of the upper panel (30) to air-communicate with the inner space (31), wherein an air supply unit 40 is air-coupled to the inner space (31) to supply the air into the inner space (31).
